# EUROPEAN PATENT SPECIFICATION

(11) **EP 1 533 196 B1**
(45) Date of publication and mention of the grant of the patent: **18.10.2006**
(21) Application number: 04027105.8
(22) Date of filing: 15.11.2004
(51) Int. Cl.: B60R 21/16

(54) **Airbag system**
Airbagvorrichtung
Système de sac gonflable

(30) Priority: 19.11.2003 JP 2003389823
(43) Date of publication of application: 25.05.2005
(73) Proprietor: TAKATA CORPORATION, Minato-ku, Tokyo 106-8510 (JP)
(72) Inventor: Noguchi, Atsushi, Tokyo 106-8510 (JP)
(74) Representative: Banzer, Hans-Jörg

(56) References cited:
- US-A1- 2002 096 864
- US-A1- 2002 158 450

## Description

The present invention relates to an airbag system to be mounted to a vehicle such as a car and, more particularly, it relates to a technique for constructing an airbag system for protecting an occupant from colliding with the sidewall of a vehicle in the event of a car accident such as a side collision or rolling.

### [Background Art]

Various techniques for constructing an airbag system have been proposed which protects an occupant from colliding with the sidewall of a vehicle such as a side window or a door in the event of a car accident such as a side collision or rolling. For example, it is known in the art to provide s structure of an airbag system having a vehicle airbag accommodated along the side roof rail'in such a state it is folded in a roll (for example, refer to Japanese Unexamined Patent Application Publication No. 2003-200809). While the reference discloses a technique of inflating and deploying a vehicle airbag smoothly by folding the vehicle airbag in a roll, a further technical research is required to achieve a high-level technique of inflating and deploying a vehicle airbag quickly and surely into an occupant protection region between a vehicle sidewall and an occupant.

US 2002 0096864A1 discloses an airbag system according to the preamble of claim 1.

### [Problems to be Solved by the Invention]

The present invention has been made in view of the above problems. Accordingly, it is an object of the present invention to provide a technique of constructing an airbag system for completely protecting an occupant in the event of a car accident.

### [Means for Solving the Problems]

According to the invention, this object is achieved by an airbag system as defined in claim 1. The dependent claim defines a preferred and advantageous embodiment of the invention.
The present invention is constructed in order to solve the foregoing problems. The invention is a technique applicable to the structure of an airbag system to be mounted to various vehicles including automobiles, trains, and vessels.

The airbag system according to the invention includes at least a vehicle airbag and gas supply means.
The vehicle airbag is mounted to the upper part of the sidewall of a vehicle and has the function of inflating downward into an occupant protection region between an occupant and the vehicle sidewall to protect the occupant in the event of a car accident such as a side collision or rolling of the vehicle. Inflating gas is supplied to the vehicle airbag through gas supply means such as an inflator having a gas generating function. The "vehicle sidewall" in this case includes the components of the vehicle located on the side (right or left) of an occupant in a broad sense, typically, a side window and a door. The vehicle airbag of the invention is typically mounted to the boundary between a side roof panel and a ceiling panel at the upper part of the vehicle sidewall.

The vehicle airbag of the invention has a folded structure in which a rolled portion and bellows portions are combined, and the bellows portion are disposed at the ends of the rolled portion adjacent to the base end of the airbag and adjacent to the distal end. In other words, the vehicle airbag is constructed of bellows means, the interval from the base end of the airbag to the distal end is partially replaced with a rolled portion.
The rolled portion is wound up in a roll (folded) and has a folded portion inside the roll (the center of the roll). The rolled portion is effective in surely inflating the vehicle airbag in an occupant protection region to offer a high protection effect. Accordingly, it is preferable to construct the rolled portion to inflate surely into the region that is to be protected, such as the head of the occupant. The bellows portion is folded like a bellows. The bellows portion is effective in inflating the vehicle airbag in an occupant protection region quickly in a short time. Since the invention has the bellows portion, the rolled portion, and the bellows portion disposed in this order from the base end of the airbag toward the distal end, the vehicle airbag can surely be inflated in the occupant protection region. Moreover, the entire vehicle airbag can be inflated quickly from the base end thereof to the distal end. The operational effects are great and difficult to obtain for the structure in which the bellow portion is simply disposed at the base end of the airbag and the rolled portion at the distal end.
Furthermore, the rolled portion of the vehicle airbag of the invention is wound up in a roll such that the projection of the inflated folded portion faces the vehicle sidewall. Briefly, when the rolled portion inflates, the projection of the folded portion is wound out toward the vehicle sidewall as a whole. Accordingly, the rolled portion is effective in maintaining smooth inflation of the vehicle airbag because it prevents the folded portion from being caught by an occupant in the process of inflation.

According to the airbag system of the invention, as described above, since the rolled portion and the bellows portions are combined preferably in the vehicle airbag and the state of roll-up of the rolled portion is devised, the vehicle airbag can be inflated surely and smoothly in the occupant protection region and also the entire vehicle airbag can be inflated quickly from the base end thereof to the distal end.
In the invention, the region where the rolled portion of the vehicle airbag inflates and the number thereof can be varied as necessary. For example, the airbag system can be constructed such that the rolled portion inflates in a region corresponding to the part of the occupant to be surely protected in addition to the region corresponding to the head of the occupant.

In the airbag system according to a preferred embodiment, the rolled portion of the vehicle airbag is constructed to inflate while deploying in the region of the occupant protection region corresponding to the head of the occupant.
The structure allows the vehicle airbag to inflate surely and smoothly in the region of the occupant protection region corresponding to the head of an occupant and also the entire vehicle airbag to inflate quickly from the base end thereof to the distal end.

### [Advantages of the Invention]

According to the invention, as described above, the vehicle airbag is constructed such that a rolled portion and bellows portions are combined, in which the bellows portions are disposed at the ends of the rolled portion adjacent to the base end of the airbag and adjacent to the distal end and the state of roll-up of the rolled portion is devised. This allows the achievement of a high-level technique of inflating the vehicle airbag quickly and surely in the occupant protection region between the vehicle sidewall and the occupant.

### [Brief Description of the Drawings]

Fig. 1 is a schematic diagram of the state of an airbag system 100 according to an embodiment of the present invention, which is mounted to a vehicle body.
Fig. 2 is an arrow diagram taken along line A-A of Fig. 1, showing the cross section of a center pillar (B-pillar) 14.
Fig. 3 is a schematic diagram of the airbag system 100 of Fig. 2.
Fig. 4 is a diagram of the state of an airbag 120 in Fig. 3 in the process of inflation as viewed from the front of the vehicle.
Fig. 5 is a diagram of the state of the airbag 120 in Fig. 3 at the completion of inflation as viewed from the front of the vehicle.
Fig. 6 is a diagram of the state of the airbag 120 in Fig. 3 at the completion of inflation as viewed from the side of the vehicle.
Fig. 7 is a diagram of the state of the airbag 120 in an airbag system 200 according to another embodiment at the completion of inflation as viewed from the side of the vehicle.
Fig. 8 is a diagram of the state of the airbag 120 in an airbag system 300 according to yet another embodiment at the completion of inflation as viewed from the side of the vehicle.
Fig. 9 is a structural diagram of a rolled portion 122 wound up in a direction different from the rolling direction shown in Fig. 3.

### [Best Mode for Carrying Out the Invention]

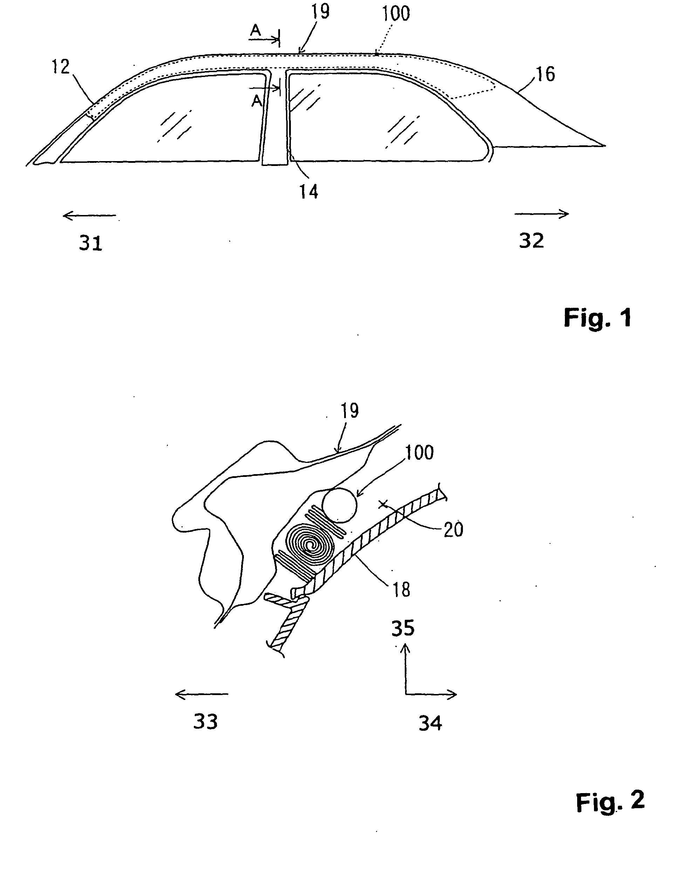

Embodiments of the present invention will be specifically described hereinafter with reference to the drawings. Referring first to Figs. 1 to 6, the structure and operation of an airbag system 100 according to an embodiment of the "airbag system" of the present invention will be described. In Figs. 1 to 6, the airbag system 100 to be mounted to the right of the body of a car will be described by way of example.

Fig. 1 schematically shows the state of the airbag system 100 of the embodiment which is mounted to a vehicle body. Fig. 2 is an arrow diagram taken along line A-A of Fig. 1, showing the cross section of a center pillar (B-pillar) 14. The airbag system 100 in Fig. 2 is in a state before operation (initial state). Fig. 1 shows the front of the vehicle 31 on the left and the rear 32 on the right. Fig. 2 shows the right wall of the vehicle, in which the interior of the cabin 34 is on the right, the outside of the cabin 33 is on the left and the upper part 35 is at the top.

As shown in Figs. 1 and 2, the airbag system 100 is disposed in a demarcated region 20 demarcated by a ceiling panel 18 and a right side roof rail (vehicle body panel) 19 and extends along the extending direction of the right side roof rail 19 from a front pillar (A-pillar) 12 to a rear pillar (C-pillar or D-pillar) 16. Briefly, the airbag system 100 and an airbag 120, to be described later, are mounted to the upper part of the vehicle sidewall.

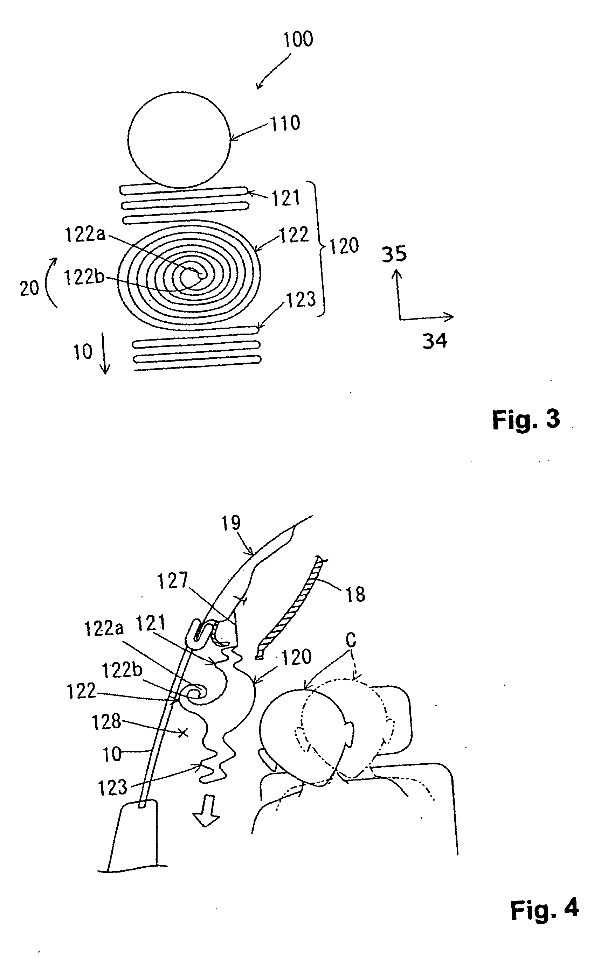

Fig. 3 is a schematic diagram of the airbag system 100 of Fig. 2. The airbag system 100, which will be specifically described later, particularly has the function of protecting an occupant quickly and reliably in the event of a car accident such as a side collision or rolling. Fig. 3 shows the airbag system 100 to be accommodated in the right wall of the vehicle, showing the interior of the cabin on the right.

As shown in Fig. 3, the airbag system 100 is principally constructed of the airbag 120 accommodated in a folded state in a predetermined shape and an inflator (gas generator) 110 which can generate inflating gas to supply the inflating gas into the space in the airbag 120. The inflator 110 serves as "gas supply means" of the present invention, and the airbag 120 corresponds to a "vehicle airbag" of the invention.
The airbag 120 is disposed such that the base end (adjacent to the inflator 110) is located nearly at the upper part and the distal end is located nearly at the lower part when the airbag system 100 is mounted in the vehicle body. The airbag 120 is fixed to the right side roof rail 19 via brackets 127, to be described later.
The inflator 110 is connected to the airbag 120 so as to supply inflating gas into the space in the airbag 120. The airbag 120 has a hybrid folded structure in which bellows portions which are folded like bellows (an accordion) and a rolled portion which is wound up (folded) in a roll are combined.

Specifically, a first bellows portion 121, a rolled portion 122, and a second bellows portion 123 are disposed in this order from the base end of the airbag 120 toward the distal end. In other words, of the vehicle airbag constructed of bellows, the interval from the base end of the airbag to the distal end is partially replaced with the rolled portion.
The rolled portion 122 is rolled up in the direction of arrow 20 in Fig. 3 and has a folded portion 122a inside the roll (the center of the roll), which corresponds to the "rolled portion" of the invention. The first bellows portion 121 and the second bellows portion 123 correspond to the "bellows portion" of the invention. As hereinafter described in detail, the embodiment is constructed such that the rolled portion 122 is located in the region of an occupant protection region which covers the head of an occupant at the inflation of the airbag 120, the first bellows portion 121 is located above the head of the occupant, and the second bellows portion 123 is located below the head of the occupant.
The rolled portion 122 of this embodiment is set to be wound up into a roll such that a projection 122b of the folded portion 122a faces the sidewall of the vehicle (side window etc.) at inflation. By such setting of the rolled portion 122, the projection 122b of the folded portion 122a is rolled out toward the vehicle sidewall as a whole during inflation.

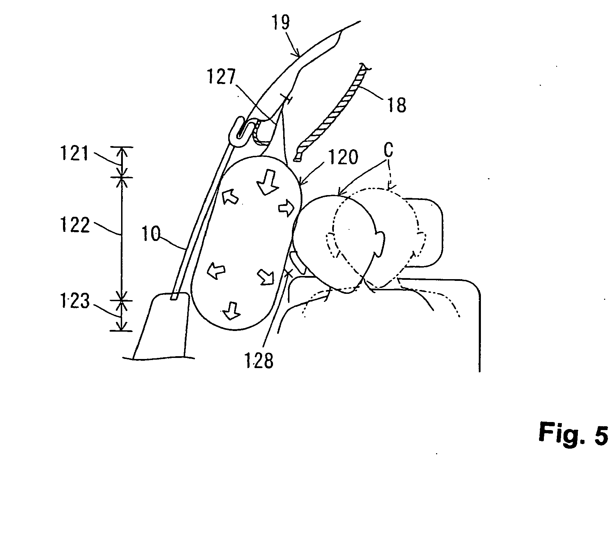

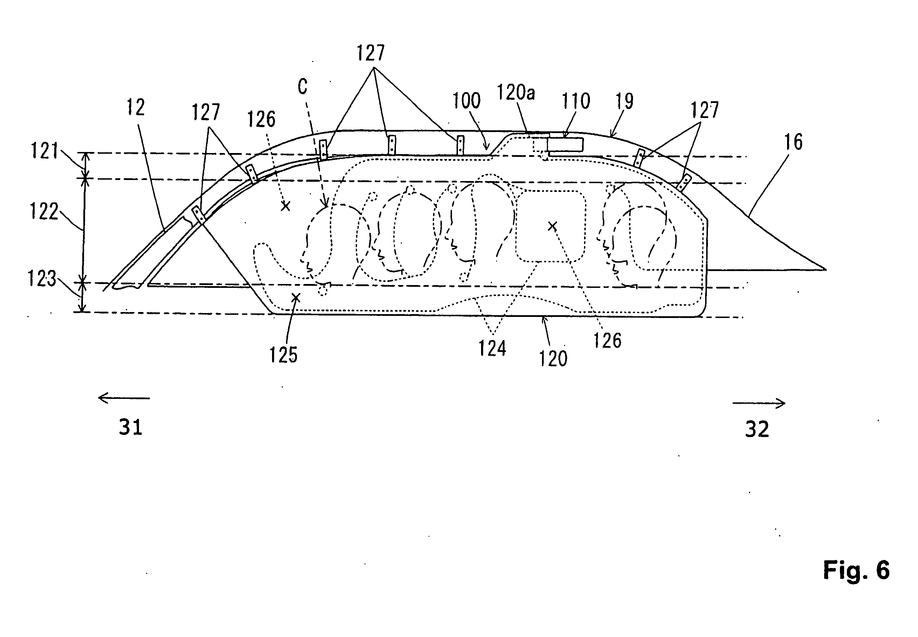

Referring now to Figs. 4 to 6, the action of the airbag system 100 with the above-described structure will be described. Fig. 4 is a diagram of the state of the airbag 120 in Fig. 3 in the process of inflation as viewed from the front of the vehicle. Fig. 5 is a diagram of the state of the airbag 120 in Fig. 3 at the completion of inflation as viewed from the front of the vehicle. Fig. 6 is a diagram of the foregoing state as viewed from the side of the vehicle. Figs. 4 and 5 show the state of the head of an occupant C before the occurrence of the side collision or rolling of the vehicle by a two-dot chain line and the state of the head of the occupant C at the side collision or rolling by a solid line.

At a side collision or rolling of a vehicle, the airbag system 100 in an initial state shown in Fig. 2 is activated to emit inflating gas from the inflator 110. The gas is supplied into the space in the airbag 120. As shown in Fig. 4, as the inflator 110 operates, the airbag 120 starts a deploying and inflating action (an inflating action while deploying) to push the ceiling panel 18 open to inflate while deploying downward toward an occupant protection region 128 between the right sidewall (side window 10) and the occupant C. The first bellows portion 121, the rolled portion 122, and the second bellows portion 123 inflate while deploying in the occupant protection region 128 in the process of deploying inflation of the airbag 120. The occupant protection region 128 is a protection region formed between the occupant C and the vehicle sidewall and corresponds to the "occupant protection region" of the invention.

In this embodiment, the bellows portions 121 and 123 are disposed at the base end and the distal end of the airbag 120, with the rolled portion 122 interposed therebetween. Accordingly, the entire airbag 120 inflates while deploying quickly from the upper part of the vehicle toward the lower part (in the direction of arrow 10 in Fig. 3). Thus, the folded state of the bellows portion is advantageous to release the folded state, thereby inflating while deploying quickly in a short time.

This embodiment uses the rolled portion 122, which is folded in a roll, of the airbag 120 to cover the head of the occupant C. Accordingly, the airbag 120 can surely be inflated to deploy in the region of the occupant protection region 128 corresponding to the head of the occupant C, providing high protection effect. Moreover, the rolled portion 122 which covers the head of the occupant C is constructed such that the projection 122b of the folded portion 122a faces the sidewall of the vehicle at inflation. This prevents the folded portion 122a of the rolled portion 122 from being caught by the occupant C in the process of inflation, thereby maintaining smooth inflation of the airbag 120.
While the rolled portion is effective in enhancing occupant protecting effect, a bellows portion is more effective than the rolled portion in inflating the airbag quickly. Therefore, it is preferable to limit the region to be protected by the rolled portion to a minimum required range like an occupant's head.

Thus, as shown in Figs. 5 and 6, the airbag 120 inflates while deploying quickly and surely into a space (the occupant protection region 128 in Fig. 5) between the right sidewall (side window 10) and the head of the occupant C, with the top supported by the right side roof rail 19 via the multiple brackets 127. The airbag 120 inflates in the occupant protection region 128 into a curtain shape that protects a range from the front pillar 12 to the rear pillar 16, that is, a wide range from the position of a front-seat occupant to the position of a rear-seat occupant collectively. The airbag 120 is thus also referred to as what is called a "curtain airbag."

As shown in Fig. 6, the embodiment is constructed such that the vertical length of the rolled portion 122 of the inflated airbag 120 is set to correspond to the positions of the heads of occupants having different body shapes such as heights and sitting heights and the positions of the heads of occupants in different seats such as a front seat and a rear seat. The inflated airbag 120 thus acts to receive and protect surely the head of the occupant C which moves toward the right sidewall (side window 10) at the side collision or rolling of the vehicle. Thus, the occupant C is completely protected at the side collision or rolling of the vehicle.
The inner space of the airbag 120 of this embodiment is divided into an inflating portion 125 and a noninflating portion 126 by a seam 124. Inflating gas supplied through a gas supply port 120a is regularly guided in the inner space to form a desired gas flow.

According to the embodiment, as described above, since the rolled portion 122 and the bellows portions 121 and 123 are suitably combined in the airbag 120 and the state of roll-up of the rolled portion 122 is devised, the airbag 120 can be inflated surely and smoothly in the occupant protection region 128 and also the entire airbag 120 can be inflated quickly from the base end thereof to the distal end. This allows the achievement of high-level technique of inflating the airbag 120 to deploy in the occupant protection region 128 between the vehicle sidewall and an occupant quickly and surely in the event of a car accident and, particularly, protecting the head of the occupant C.

### [Other embodiments]

It should be understood that the invention is not limited to the foregoing embodiment but various applications and modifications can be made. For example, the following embodiments to which the aforesaid embodiment is applied can also be made.

Although the above embodiment takes the airbag system 100 which protects the occupant C in the right seat of a vehicle by way of example, an airbag system which protects an occupant in the left seat of the vehicle is also mounted similarly. The airbag system has a structure in which a system symmetric to the airbag system 100 is fixed to a left side roof rail.

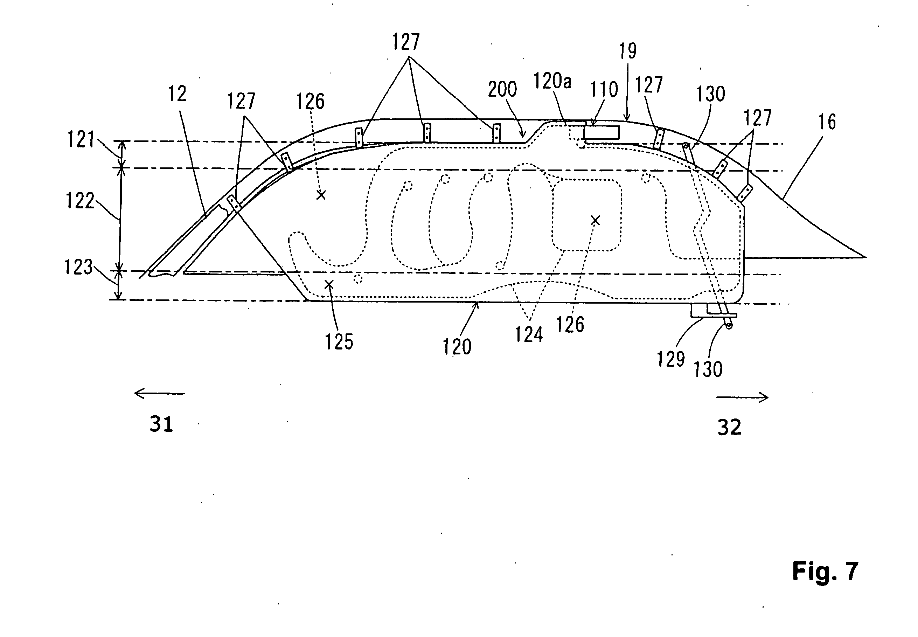

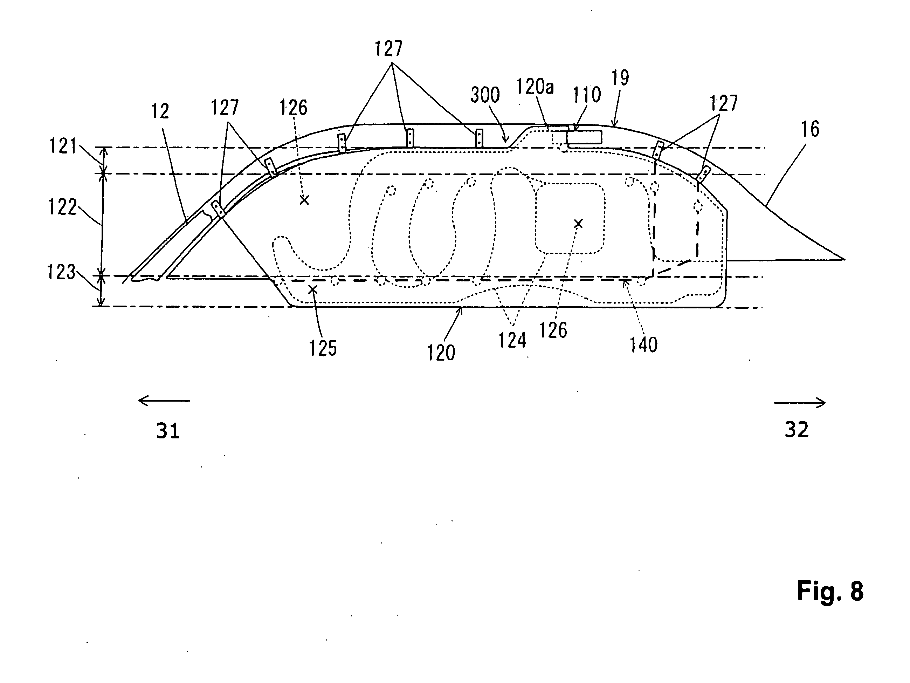

In the invention, an airbag system 200 shown in Fig. 7 or an airbag system 300 shown in Fig. 8 can also be employed in place of the airbag system 100 of the foregoing embodiment. Referring to Figs. 7 and 8, the structures of the airbag system 200 and the airbag system 300 will now be described. In Figs. 7 and 8, the same components as those of Fig. 6 are given the same numerals and their detailed description will be omitted.

The airbag system 200 shown in Fig. 7 includes a guide 130 for guiding the part of the airbag 120 adjacent to the rear of the vehicle from the upper part of the vehicle toward the lower part along the rear pillar 16. The guide 130 is long and fixed to the rear pillar 16. A connecting strap (tension strap) 129 of the airbag 120 is wound around the guide 130, so that the airbag 120 and the guide 130 are joined together. The connecting strap 129 connected to the guide 130 has the function of preventing the head of an occupant from being thrown out of the vehicle at a car accident.
The airbag system 300 shown in Fig. 8 includes a wire 140 that supports the inflated airbag 120.
The airbag systems 200 and 300 with such structures include the airbag 120 which is folded in the same way as in the airbag system 100. This achieves a high-level technique of inflating the airbag 120 quickly and surely in the occupant protection region 128 between the vehicle sidewall and the occupant at a car accident and, particularly, protecting the head of the occupant C.

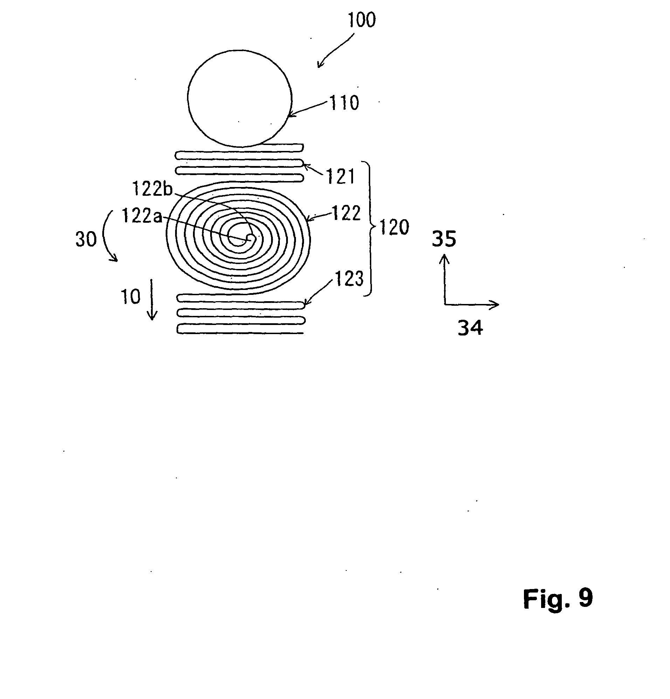

Although the foregoing embodiments have been described for the case in which the rolled portion 122 is rolled up in the direction of arrow 20 in Fig. 3, another roll-up structure may be used. Fig. 9 shows the structure of the rolled portion 122 wound up in a direction different from the rolling direction shown in Fig. 3.
The rolled portion 122 of Fig. 9 is wound up in the direction of arrow 30 opposite to that of arrow 20 in Fig. 3. Even with the rolled portion 122 with such a structure, the projection 122b of the folded portion 122a faces the vehicle sidewall (side window etc.) at inflation. Accordingly, the rolled portion 122 belongs to the category of the "rolled portion" of the invention. The structure of the rolled portion 122 shown in Fig. 9 can be applied to any of the airbag systems 100, 200, and 300.

The airbag system of the invention may be constructed such that the components of the airbag system are mounted in sequence or, alternatively, a module airbag system which is designed in modules is mounted to or dismounted from a vehicle body every module as a whole.

Although the foregoing embodiments have been described for the airbag 120 which protects a wide range from the position of a front seat occupant to the position of a rear seat occupant collectively, the airbag of the present invention can be divided to multiple parts. For example, the airbag is divided to a first airbag for protecting a front seat occupant and a second airbag for protecting a rear seat occupant. This structure is effective in inflating the airbags disposed in a divided manner at a desired speed. Such a structure is particularly effective in a vehicle in which the distance from the front pillar to the rear pillar is long and the distance of the occupant protection region along the length of the vehicle is long.

While the embodiments have been described for the structure of an airbag system to be mounted to a car, the invention can also be applied to the structure of an airbag system to be mounted to vehicles other than cars, such as trains or vessels.

## Claims

1. A airbag system comprising a vehicle airbag (120) mounted to the upper part of the sidewall of a vehicle and to be inflated downward into an occupant protection region (128) between an occupant (C) and the vehicle sidewall to protect the occupant (C) in the event of a car accident and gas supply means (110) for supplying inflating gas to the vehicle airbag (120), wherein
the vehicle airbag (120) comprises a rolled portion (122) wound up in a roll and has a folded portion (122a) inside the roll and a bellows portion (121) provided at an end of the rolled portion (122) adjacent to the base end of the airbag (120) and folded like a bellows **characterized in that** a further bellow portion (123) is provided at the end of the rolled portion (122), adjacent to the distal end of the airbag (120) and folded like a bellows, and that
the rolled portion (122) is wound up in a roll such that the projection (122b) of the inflated folded portion (122a) faces the vehicle sidewall.

2. The airbag system according to claim 1, wherein
the rolled portion (122) of the vehicle airbag (120) is constructed to inflate while deploying in the region of the occupant protection region (128) corresponding to the head of the occupant (C).

## Patentansprüche

1. Airbagsystem umfassend einen Fahrzeugairbag (120), welcher an dem oberen Teil der Seitenwand eines Fahrzeugs angebracht ist und welcher nach unten in einen Insassenschutzbereich (128) zwischen einem Insassen (C) und der Fahrzeugseitenwand aufzublasen ist, um den Insassen (C) in dem Fall eines Fahrzeugunfalls zu schützen, und Gaszufuhrmittel (110) zum Zuführen eines Aufblasgases zu dem Fahrzeugairbag (120), wobei
der Fahrzeugairbag (120) einen gerollten Abschnitt (122), welcher in einer Rolle aufgewickelt ist und einen gefalteten Abschnitt (122a) innerhalb der Rolle aufweist, und einen Balgabschnitt (121), welcher an einem Ende des gerollten Abschnitts (122) benachbart zu dem Basisende des Airbags (120) bereitgestellt ist und wie ein Balg gefaltet ist, umfasst,
**dadurch gekennzeichnet,**
**dass** ein weiterer Balgabschnitt (123) an dem Ende des gerollten Abschnitts (122) benachbart zu dem distalen Ende des Airbags (120) vorgesehen ist und wie ein Balg gefaltet ist, und dass
der gerollte Abschnitt (122) in einer Rolle derart aufgewickelt ist, dass der Vorsprung (122b) des aufgeblasenen gefalteten Abschnitts (122a) gegenüber der Fahrzeugseitenwand angeordnet ist.

2. Airbagsystem nach Anspruch 1, wobei der gerollte Abschnitt (122) des Fahrzeugairbags (120) hergestellt ist, um sich aufzublasen, während er sich in den Bereich des Insassenschutzbereichs (128), der dem Kopf des Insassen (C) entspricht, entfaltet.

## Revendications

1. Système de coussin gonflable comprenant un coussin gonflable de véhicule (120) monté sur la partie supérieure de la paroi latérale d'un véhicule et destiné à être gonflé vers le bas dans une région de protection de l'occupant (128) entre un occupant (C) et la paroi latérale du véhicule afin de protéger l'occupant (C) en cas d'accident de voiture et des moyens d'alimentation en gaz (110) pour fournir le gaz gonflant au coussin gonflable de véhicule (120), dans lequel
le coussin gonflable de véhicule (120) comprend une partie roulée (122) enroulée en un rouleau et a une partie pliée (122a) à l'intérieur du rouleau et une partie à soufflet (121) prévue à une extrémité de la partie roulée (122) adjacente à l'extrémité de base du coussin gonflable (120) et pliée comme un soufflet, **caractérisé en ce qu'**une autre partie à soufflet (123) est prévue à l'extrémité de la partie roulée (122) adjacente à l'extrémité distale du coussin gonflable (120) et pliée comme un soufflet, et **en ce que**
la partie roulée (122) est enroulée en un rouleau de sorte que la saillie (122b) de la partie pliée gonflée (122a) fait face à la paroi latérale du véhicule.

2. Système de coussin gonflable selon la revendication 1, dans lequel
la partie roulée (122) du coussin gonflable de véhicule (120) est construite pour gonfler tout en se déployant dans la région de la région de protection de l'occupant (128) correspondant à la tête de l'occupant (C).
